Europäisches Patentamt

European Patent Office

Office européen des brevets

(11) Publication number: **0 534 476 A1**

# EUROPEAN PATENT APPLICATION

(21) Application number: **92116489.3**

(22) Date of filing: **25.09.92**

(51) Int. Cl.⁵: **C08L 83/04**, C08L 51/08,
C08F 299/08, C08L 101/00

(30) Priority: **27.09.91 JP 277094/91**

(43) Date of publication of application:
**31.03.93 Bulletin 93/13**

(84) Designated Contracting States:
**DE FR GB**

(71) Applicant: **Dow Corning Toray Silicone
Company, Limited
Mitsui Bldg. No. 6, 2-3-16,
Nihonbashi-Muromachi, Chuo-Ku
Tokyo 103(JP)**

(72) Inventor: **Furukawa, Haruhiko, Res. and Dev.
Toray
Dow Corning Silicone Co., Ltd., 2-2 Chigusa
Kaigan
Ichihara-shi, Chiba Pref.(JP)**
Inventor: **Shirahata, Akihiko, Res. and Dev.
Toray
Dow Corning Silicone Co., Ltd., 2-2 Chigusa
Kaigan
Ichihara-shi, Chiba Pref.(JP)**

(74) Representative: **Spott, Gottfried, Dr.
Spott Weinmiller & Partner
Sendlinger-Tor-Platz 11
W-8000 München 2 (DE)**

(54) **Polyorganosiloxane compositions.**

(57) The present invention relates to a polyorganosiloxane composition that is highly dispersible in thermoplastic resins. The polyorganosiloxane composition comprises, (A) a polyorganosiloxane, and (B) a copolymer of styrenic monomer and polyorganosiloxane macromonomer where the polyorganosiloxane macromonomer contains at least 1 radically-reactive unsaturated group in each molecule, and component (B) is dispersed in discontinuous form in component (A).

EP 0 534 476 A1

The present invention relates to a polyorganosiloxane composition. More specifically, the present invention relates to a polyorganosiloxane composition that is strongly qualified for application as an additive for modifying and improving the physical properties of thermoplastic resins.

Polyorganosiloxanes, as typified by polydimethylsiloxanes, have in the last several years begun to be widely used as additives for imparting moldability (such as mold releaseability, dimensional stability, etc.) to thermoplastic resins and as additives for equipping the thermoplastic resin moldings themselves with properties such as surface lubricity, impact resistance, and so forth.

However, these prior polyorganosiloxanes resist homogeneous microdispersion in thermoplastic resins. As a consequence, thermoplastic resin moldings containing such polyorganosiloxanes suffer from a number of problems, such as the occurrence of laminar exfoliation phenomena on their surface, a reduced mechanical strength, and article-to- article variations in mechanical strength.

The present inventors conducted extensive research directed at solving the aforementioned problems, and discovered as a result that a uniform dispersion in thermoplastic resin can be obtained for a polyorganosiloxane composition that comprises the dispersion of a particular type of compound in a polyorganosiloxane. The present invention takes as its object the introduction of a polyorganosiloxane composition that is highly dispersible in thermoplastic resins. An additional object of the present invention is the introduction of a polyorganosiloxane composition that is capable of imparting excellent properties such as lubrication, and mechanical strength, when applied as an additive for improving the physical properties of thermoplastic resins. The aforesaid objects are accomplished through a polyorganosiloxane composition which comprises: (A) 100 weight parts polyorganosiloxane, and (B) 1 to 200 weight parts copolymer of styrenic monomer and polyorganosiloxane macromonomer wherein said polyorganosiloxane macromonomer contains at least 1 radically-reactive unsaturated group in each molecule and component (B) is dispersed in discontinuous form in component (A).

To explain the preceding in greater detail, the polyorganosiloxane comprising component (A) used by the present invention is the base polymer in the composition according to the present invention. Examples of materials suitable for use as the polyorganosiloxane of component (A) include the following: (a) straight-chain polyorganosiloxanes such as silicone oils and silicone gums, in which the terminals consist of the $R^1_3SiO_{1/2}$ unit ($R^1$ represents substituted and unsubstituted monovalent hydrocarbon groups or the hydroxyl group) and the non-terminal siloxane units consist of the $R^2_2SiO$ unit ($R^2$ is a substituted or unsubstituted monovalent hydrocarbon group), (b) branched polyorganosiloxanes composed of the aforesaid siloxane units plus very small quantities of the $R^2_aSiO_{(4-a)/2}$ unit ($R^2$ is defined as above and a = 0 or 1), and (c) polyorganosiloxanes that are generally designated as silicone resins and that consist of the $R^1_3SiO_{1/2}$ unit ($R^1$ is defined as above) and $R^2_aSiO_{(4-a)/2}$ unit ($R^2$ and a are defined as above) wherein ($R^1$ + $R^2$)/Si has a value from 1.0 to 1.9. The above-referenced organic groups $R^1$ and $R^2$ bonded in these polyorganosiloxanes are exemplified by alkyl groups such as methyl, ethyl, and propyl, by alkenyl groups such as vinyl and allyl, by aryl groups such as phenyl, by aralkyl groups such as beta-phenylethyl, and by these groups in which part of the hydrogen has been replaced by chlorine, fluorine, a nitrile group, and the like. Methyl preferably comprises at least 90 mole% of each of groups $R^1$ and $R^2$, and it is even more preferred that $R^1$ consist entirely of methyl. This organopolysiloxane can be synthesized by methods that are in fact known, and its morphology and degree of polymerization are not specifically restricted. The polyorganosiloxane of component (A) is preferably selected from the group consisting of trimethylsiloxy-terminated polydimethylsiloxanes, dimethylhydroxysiloxy-terminated polydimethylsiloxanes, trimethylsiloxy-terminated methylphenylsiloxane-dimethylsiloxane copolymers, trimethylsiloxy-terminated diphenylsiloxane-dimethylsiloxane copolymers, trimethylsiloxy-terminated dimethylsiloxane-methylvinylsiloxane copolymers, dimethylvinylsiloxy-terminated polydimethylsiloxanes, and dimethylvinylsiloxy-terminated dimethylsiloxane-methylvinylsiloxane copolymers.

The copolymer comprising the component (B) used by the present invention comprises a copolymer of styrenic monomer and a polyorganosiloxane macromonomer wherein the polyorganosiloxane macromonomer has at least one radically- reactive unsaturated group in each molecule. The styrenic monomer denotes a monomer whose principal component is styrene monomer, and this includes styrene and monomers copolymerizable with styrene and mixtures thereof. Monomers copolymerizable with styrene useful in component (B) of the present invention include methacrylate esters such as methyl methacrylate, ethyl methacrylate, and butyl methacrylate, acrylate esters such as methyl acrylate, ethyl acrylate, and butyl acrylate, and acrylonitrile. The polyorganosiloxane macromonomer possessing radically-reactive unsaturation is exemplified by a polyorganosiloxane bearing a methacryloxypropyl, allyl, or vinylbenzyl group at one molecular chain terminal and by an organopolysiloxane bearing a methacryloxypropyl, allyl, or vinylbenzyl group at both molecular chain terminals. The following molecular structures are suitable for this copolymer: copolymers in which a block or blocks comprising styrenic polymer and a block or blocks comprising polyorganosiloxane are bonded into a straight chain (i.e. "block copolymer"), and copolymers in which the aforesaid blocks are bonded into a branched chain (i.e. "graft copolymer"). The blocks composed of styrenic polymer contain at least one type of monomer, but must contain styrene monomer. This block length (i.e. degree of polymerization) preferably falls within the range of 1 to 1,000 and more preferably falls within the range of 10 to 800, while its distribution and block structure are not specifically restricted. The blocks composed of polyorganosiloxane preferably have a length of 1 to 2,000 and more preferably of 10 to 1,000. In addition, the styrenic monomer block-polyorganosiloxane block ratio in this copolymer preferably falls within the range from 1 to 99 to 99 to 1 (weight ratio) and more preferably within the range of 25 to 75 to 95 to 5 (weight ratio).

The copolymer comprising component (B) can be readily prepared by well-known ionic polymerization and radical polymerization methods. These methods are exemplified as follows: (a) synthesis by a known method of linear polysiloxane macromonomer containing radically-reactive unsaturation, then radical reaction of this macromonomer with styrenic monomer in the presence of a radical-reaction catalyst and (b) anionic polymerization of the styrenic monomer, followed by the addition thereto of linear polysiloxane macromonomer containing radically-reactive unsaturation, then anionic polymerization.

In the present invention component (B) must be dispersed in discontinuous form in the polyorganosiloxane comprising component (A), and it is generally dispersed as granular or lump-like particles. To support this, the polyorganosiloxane moiety in the copolymer comprising component (B) preferably has a chemical structure at least similar to that of the polyorganosiloxane comprising component (A). For example, when the polyorganosiloxane comprising component (A) is a polydimethylsiloxane, the polyorganosiloxane block in component (B) is preferably polydimethylsiloxane. Or, when the polyorganosiloxane comprising component (A) is phenylmethylpolysiloxane, the polyorganosiloxane block in component (B) is preferably phenylmethylpolysiloxane. Moreover, when the composition according to the present invention is to be employed as an additive for improving the physical properties of styrenic resin (styrenic parent resin), the styrenic polymer block in component (B) preferably has a chemical structure at least similar to that of the styrenic parent resin. Thus, for example, when the parent resin is a styrene-methyl methacrylate copolymer, the styrenic polymer block in component (B) is preferably a styrene-methyl methacrylate copolymer.

Component (B) should be added at 1 to 200 weight parts per 100 weight parts component (A) and is preferably added at 10 to 100 weight parts per 100 weight parts component (A). When component (B) is present at less than 200 weight parts per 100 weight parts component (A), component (B) becomes microdispersed in component (A) to form islands, thus developing a type of self-emulsified condition. On the other hand, when component (B) exceeds 200 weight parts, it is component (A) that becomes dispersed in island form in component (B), and addition to the parent resin in this condition will cause problems. The size of the dispersed particles of component (B) will depend on the type of component (B) and the viscosity and type of the polyorganosiloxane comprising component (A). For example, the dispersed particle size will be on the submicron level when component (A) is a polydimethylsiloxane and component (B) is a polystyrene-polydimethylsiloxane block copolymer. The aforesaid self-emulsified condition is stable and will not undergo phase separation or changes in the size of the dispersed particles even upon long-term standing at room temperature. This emulsified condition can be produced by heating the reaction mixture to a temperature necessary to melt the copolymer comprising component (B) and thereby develop a satisfactory fluidity (to at least 200°C), and by then applying high shear to the system while it is in this condition. This can be executed as a batch method using an emulsifying device capable of high-temperature operations or as a continuous production method using an extruder.

In its applications as an additive for thermoplastic resin, the composition according to the present invention is generally added at several weight parts per the total weight parts of the parent resin. When added in an extrusion or injection molding process, a phase transition occurs during melt mixing and the polyorganosiloxane comprising component (A) forms a dispersed phase. At this point, component (B) is present at the interface between component (A) and the parent resin and functions as a type of surfactant to reduce the surface tension between the parent resin and the polyorganosiloxane phase. As a result of this activity, the particle size of the dispersed polyorganosiloxane phase will be substantially smaller than for the addition of the polyorganosiloxane by itself, and the dispersion rate is also improved. Thus, under the same shear conditions, dispersion proceeds more rapidly than for addition of the polyorganosiloxane by itself. Moreover, a higher degree of dispersion can be obtained under less severe shear conditions.

The present invention will be explained in greater detail below through illustrative examples, in which the viscosity is the value measured at 25°C and cs is an abbreviation for centistokes.

EXAMPLE 1

Dry hexamethyltrisiloxane (22.5 g) was dissolved in 22.5 g tetrahydrofuran (THF) under a nitrogen current, and to this solution was then added 1.7 ml of hexane solution containing 15 weight% of n-butyllithium. The reaction was carried out at room temperature for 4 hours with stirring. The reaction was then stopped by the addition of 180 mg acetic acid. The unreacted hexamethyltrisiloxane and the THF were removed from the obtained reaction mixture by distillation in vacuo, and filtration then resulted in a transparent oil. To 20 g of this oil were added 0.71 g methacryloxypropyldimethylchlorosilane and 0.49 g triethylamine, and the mixture was then stirred for 1 hour at room temperature and filtered. The unreacted material was removed by heating in vacuo to yield a dimethylpolysiloxane having the methacryloxypropyl group at one molecular chain terminal and the n-butyldimethylsiloxy group at the other terminal (alpha-methacryloxypropyl-omega-(n-butyl)dimethylsiloxypolydimethylsiloxane). This dimethylpolysiloxane (20 g), 20 g styrene monomer, and 40 mg azobisisobutyronitrile were then dissolved in 100 ml of toluene. This toluene solution was dripped under a nitrogen current into 100 ml of toluene heated to 80°C. The reaction was stirred for an additional 4 hours at 80°C after the completion of addition. After completion of the reaction, the reaction mixture was poured into a large excess of methanol to produce a white precipitate. This was washed with methanol and dried at room temperature to give a styrene monomer/polydimethylsiloxane macromonomer copolymer (copolymer (a)). Analysis by gel permeation chromatography and an infrared absorption spectral analyzer confirmed this copolymer (a) to be a copolymer composed of a polystyrene chain and a polydimethylsiloxane chain.

The following were placed in a 200 ml beaker and heated to 200°C: 90 g polydimethylsiloxane having viscosity of 100 cs and 10 g of the copolymer (a) prepared in Example 1. The turbine element of a homomixer (from Tokushu Kika Kogyo Company, Limited) was immersed into this mixture, which was then stirred for 30 minutes at 3,000 rpm to afford a polydimethylsiloxane composition. This composition was a milky white oil. A 200-fold dilution was carried out by the addition of 200 g polydimethylsiloxane having a viscosity of 100 cs to 1.0 g of this composition. The particle size of copolymer (a) was then measured using an instrument for measuring particle size distributions (Coulter Model N4MD from Coulter Denshi Kabushiki Kaisha). In addition, the above-mentioned white oil was held for 1 month at room temperature, after which its appearance was evaluated and the size of the dispersed particles was measured as above. These results are reported in Table I below.

COMPARISON EXAMPLE 1

A polydimethylsiloxane composition was prepared as in Example 1, but in the present case using polystyrene resin (Styron 666 from Asahi Kasei Kogyo Kabushiki Kaisha) in place of the copolymer (a) used in Example 1. The properties of this composition were evaluated as in Example 1, and these results are also reported in Table I below.

EXAMPLE 2

The following were placed in a 200 mL beaker and heated to 200°C: 50 g polydimethylsiloxane having a viscosity of 100 cs and 50 g of the copolymer (a) prepared in Example 1. The turbine element of a homomixer (from Tokushu Kika Kogyo Company, Limited) was immersed into this mixture, which was then stirred for 30 minutes at 3,000 rpm to afford a polydimethylsiloxane composition. This composition was a milky white oil. A 200-fold dilution was carried out by the addition of 200 g polydimethylsiloxane having a viscosity of 100 cs to 1.0 g of this composition. The particle size of copolymer (a) was then measured using an instrument for measuring particle size distributions (Coulter Model N4MD from Coulter Denshi Kabushiki Kaisha). In addition, the above-mentioned white oil was held for 1 month at room temperature, after which its appearance was evaluated and the size of the dispersed particles was measured as above. These results are also reported in Table I below.

COMPARISON EXAMPLE 2

The following were placed in a 200 ml beaker and heated to 200°C: 25 g polydimethylsiloxane having a viscosity of 100 cs and 75 g of the copolymer (a) prepared in Example 1. The turbine element of a homomixer (from Tokushu Kika Kogyo Company, Limited) was immersed into this mixture, which was then stirred for 30 minutes at 3,000 rpm to afford a polydimethylsiloxane composition. This composition was a milky white oil. A 200-fold dilution was carried out by the addition of 200 g polydimethylsiloxane having a viscosity of 100 cs to 1.0 g of this composition. The particle size of copolymer (a) was then measured using an instrument for measuring particle size distributions (Coulter Model N4MD from Coulter Denshi Kabushiki Kaisha). In addition, the above-mentioned white oil was held for 1 month at room temperature, after which its appearance was evaluated and the size of the dispersed particles was measured as above. These results are also reported in Table I below.

EXAMPLE 3

The following were placed in a 200 mL beaker and heated to 200°C: 90 g polydimethylsiloxane having a viscosity of 1,000 cs and 10 g of the copolymer (a) prepared in Example 1. The turbine element of a homomixer (from Tokushu Kika Kogyo Company, Limited) was immersed into this mixture, which was then stirred for 30 minutes at 3,000 rpm to afford a polydimethylsiloxane composition. This composition was a milky white oil. A 200-fold dilution was carried out by the addition of 200 g polydimethylsiloxane having a viscosity of 100 cs to 1.0 g of this composition. The particle size of copolymer (a) was then measured using an instrument for measuring particle size distributions (Coulter Model N4MD from Coulter Denshi Kabushiki Kaisha). In addition, the above-mentioned white oil was held for 1 month at room temperature, after which its appearance was evaluated and the size of the dispersed particles was measured as above. These results are also reported in Table I below.

EXAMPLE 4

Into a 30 ml Brabender PlastiCorder were introduced 25.5 g polydimethylsiloxane having a viscosity of 10,000,000 cs and 4.5 g copolymer (a) prepared in Example 1, and these were mixed for 10 minutes at 100 rpm with heating to 220°C to afford a polydimethylsiloxane composition (b). The properties of this composition were measured as in Example 1, and these results are also reported in Table I below.

## TABLE I

| EXAMPLE | COMPONENT (A) (WEIGHT PARTS) | COMPONENT (B) (WEIGHT PARTS) | PROPERTIES | SIZE OF DISPERSED PARTICLES |
|---------|------------------------------|------------------------------|------------|-----------------------------|
| 1 | 90 | 10 | LONG TERM STABILITY | 130 nm |
| COMP. EX. 1 | 90 | 10 | IMMEDIATE SEPARATION | - |
| 2 | 50 | 50 | LONG TERM STABILITY | 150 nm |
| COMP. EX. 2 | 25 | 75 | GEL | - |
| 3 | 90 | 10 | LONG TERM STABILITY | 300 nm |
| 4 | 90 | 10 | LONG TERM STABILITY | 1000 nm |

EXAMPLE 5

Into a 30 ml Brabender PlastiCorder were introduced 21 g polystyrene resin (Styron 666 from Asahi Kasei Kogyo Kabushiki Kaisha) and 8.05 g of polydimethylsiloxane composition (b) prepared in Example 4, and these were mixed for 10 minutes at 100 rpm with heating to 220°C. The resulting mixture was quenched with liquid nitrogen and then broken up with a hammer. This crushed material was immersed in n-hexane for 2 hours, and its fracture surface was subsequently inspected using a scanning electron microscope in order to measure the size of the dispersed particles of the polydimethylsiloxane composition that had been dispersed in the polystyrene resin. These measurement results are reported in Table II below. In this procedure, the size of the dispersed particles is determined by measuring the size of the holes left by elution at the fracture surfaces of the polydimethylsiloxane composition component from the polydimethylsiloxane composition dispersed phase that had been dispersed in the polystyrene resin.

COMPARISON EXAMPLE 3

A polystyrene resin composition was prepared as in Example 5, but in the present case using 1.05 g copolymer (a) and 7 g of a polydimethylsiloxane having a viscosity of 10,000,000 cs in place of the polydimethylsiloxane composition (b) used in Example 5. The state of the dispersion of the polydimethylsiloxane (PDMS) composition dispersed in the polystyrene resin composition thus prepared was measured as in Example 5, and these measurement results are also reported in Table II.

### TABLE II

| EXAMPLE | SIZE OF THE DISPERSED PARTICLES OF PDMS COMPOSITION IN THE POLYSTYRENE RESIN |
|---------|------------------------------------------------------------------------------|
| 5 | 1.5 MICROMETERS |
| COMP. EX. 3 | 2.0 MICROMETERS |

Claims

1. A composition comprising:
   (A) 100 weight parts of a polyorganosiloxane; and
   (B) 1 to 200 weight parts of a copolymer of styrenic monomer and polyorganosiloxane macromonomer wherein said polyorganosiloxane macromonomer contains at least 1 radically-reactive unsaturated group in each molecule.

2. In a method of improving the physical properties of thermoplastic resins which includes the addition of an additive to said resins, the improvement comprising using as the additive the composition of claim 1.

3. A composition according to claim 1, said composition further comprising a thermoplastic resin.

4. A polyorganosiloxane composition prepared by:
   (A) forming a mixture of:
      (a) 100 weight parts of a polyorganosiloxane; and
      (b) 1 to 200 weight parts of a copolymer of styrenic monomer and polyorganosiloxane macromonomer wherein said polyorganosiloxane macromonomer contains at least 1 radically-reactive unsaturated group in each molecule;
   (B) heating said mixture to a temperature sufficient to melt component (b); and
   (C) shearing said mixture whereby a stable dispersion of component (b) in component (a) is formed.

5. A composition according to claim 4, said composition further comprising a thermoplastic resin.

6

European Patent Office

**EUROPEAN SEARCH REPORT**

Application Number

EP 92 11 6489

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 105 982 (DOW CORNING CORPORATION)<br>* claims *<br>* page 2, line 39 - page 4, line 32 *<br>* page 7, line 16 - line 27 *<br>* page 8, line 20 - page 9, line 12 *<br>* page 9, line 23 - line 28 *<br>* page 10, line 26 - line 38 *<br>* example 8 *<br>--- | 1-3 | C08L83/04<br>C08L51/08<br>C08F299/08<br>C08L101/00 |
| P,X | DATABASE WPIL<br>Section Ch, Week 9218, 1 July 1992<br>Derwent Publications Ltd., London, GB;<br>Class A18, AN 92-147702<br>& JP-A-4 089 857 (JAPAN SYNTHETIC RUBBER)<br>24 March 1992<br>* abstract *<br>--- | 1-3 | |
| A | DATABASE WPIL<br>Section Ch, Week 9005, 28 March 1990<br>Derwent Publications Ltd., London, GB;<br>Class A13, AN 90-032289<br>& JP-A-1 308 446 (MITSUI TOATSU CHEM. INC.) 13 December 1989<br>* abstract *<br>--- | 1-5 | |
| A | US-A-4 990 561 (YOSHIOKA)<br>* claims 1,2,4,5,7-18 *<br>* column 3, line 38 - column 5, line 44 *<br>* column 6, line 30 - line 50 *<br>--- | 1-3 | TECHNICAL FIELDS SEARCHED (Int. Cl.5 )<br><br>C08L<br>C08F<br>C08G |
| A | DE-A-2 011 046 (DOW CORNING CORP.)<br>* claims *<br><br>----- | 1 | |

The present search report has been drawn up for all claims

| Place of search | Date of completion of the search | Examiner |
|---|---|---|
| THE HAGUE | 03 DECEMBER 1992 | HOLLENDER C.J.F |

EPO FORM 1503 03.82 (P0401)